# EUROPÄISCHE PATENTSCHRIFT

(11) **EP 3 670 998 B1**
(45) Veröffentlichungstag und Bekanntmachung des Hinweises auf die Patenterteilung: **16.11.2022**
(21) Anmeldenummer: 18306728.9
(22) Anmeldetag: 18.12.2018
(51) Int. Cl.: F16L 59/14, F16L 59/18

(54) **KUPPLUNG FÜR FLUIDFÜHRENDE LEITUNGEN**
COUPLING FOR FLUID CONDUITS
ACCOUPLEMENT POUR CONDUITES DE FLUIDE

(43) Veröffentlichungstag der Anmeldung: 24.06.2020
(73) Patentinhaber: Nexans, 92400 Courbevoie (FR)
(72) Erfinder: SCHULZ, Holger, 30165 HANNOVER (DE); REITER, Christian, 31157 SARSTEDT (DE)
(74) Vertreter: Ipsilon

(56) Entgegenhaltungen:
- EP-A1- 2 781 818
- WO-A1-00/25054
- WO-A1-84/03929
- WO-A1-2011/061704
- DE-A1-102013 100 483
- GB-A- 2 296 749
- US-A- 5 941 287

## Beschreibung

### Gebiet

Die Erfindung betrifft Kupplungen zur Verbindung fluidführender Leitungen, insbesondere von Leitungen für tiefkalte Fluide.

### Hintergrund

Die Verladung von tiefkalten Medien, zum Beispiel verflüssigten Gasen, auf Tanklastwagen oder Schiffe erfolgt häufig mit nicht oder nur teilweise wärmeisolierten Leitungen und insbesondere mit nicht wärmeisolierten Kupplungen. In Bereichen ohne Wärmeisolierung wird die Temperatur der äußeren Oberfläche der nicht isolierten Leitungen und Kupplungen sehr stark abgesenkt, sodass die Leitungen und Kupplungen in diesen Bereichen bei der Verladung vereisen. Bei der Verladung sehr kalter Flüssigkeiten, zum Beispiel von flüssigem Wasserstoff mit einer Temperatur von -253 °C oder flüssigem Helium mit einer Temperatur von -269 °C, kann an der Oberfläche von nicht isolierten Leitungen und Kupplungen Sauerstoff aus der Atmosphäre kondensieren, der bei -183° flüssig wird. Flüssiger Sauerstoff steigert die Brandgefahr in erheblichem Maße, was ganz offensichtlich unerwünscht ist.

Die Verwendung von starren oder flexiblen wärmeisolierten Leitungen mit einer Isolierung, die die Temperatur an der Oberfläche der Leitungen und Kupplungen stets über dem Siedepunkt von Sauerstoff hält kann dieses Problem zumindest an den Leitungen selbst vermeiden. Eine geeignete Wärmeisolierung kann beispielsweise mittels vakuumisolierter Leitungen erreicht werden.

Einige Komponenten von Leitungen für tiefkalte Fluide können nicht oder nur unter großem Aufwand isoliert, insbesondere vakuumisoliert werden. Hierzu gehören Kupplungen, die Leitungsabschnitte fest oder lösbar miteinander verbinden, und Kupplungen zum Anschluss an den zu füllenden oder zu entleerenden Transportbehälter. Neben den vorstehend genannten Kupplungen müssen Leitungen von Verladeeinrichtungen für tiefkalte Medien in der Regel mit einer Nottrennkupplung ausgestattet sein, die bei Überschreiten einer axialen, auf die Kupplungsteile oder die daran angeschlossenen Leitungen wirkenden Zugkraft oder bei Überschreiten eines auf die Kupplungsteile oder die daran angeschlossenen Leitungen wirkenden Biegemoments die Kupplungsteile und somit die Leitungsabschnitte voneinander trennt, und dadurch eine Beschädigung der Leitungen oder der Verladeeinrichtung verhindert oder begrenzt. Die Nottrennkupplungen und die werkzeuglos lösbaren Kupplungen weisen häufig sehr komplexe und voluminös bauende Auslösemechanismen auf, die nur schwierig thermisch zu isolieren sind.

Es existieren zwar Kupplungen für thermisch isolierte fluidführende Leitungen, die selbst eine Isolierung bereitstellen, z.B. sogenannte Johnston-Kupplungen. Bei diesen bekannten Kupplungen müssen die Kupplungshälften jedoch über längere Strecken ineinandergreifen, was insbesondere eine schnelle Trennung der Leitungsteile voneinander ungünstig beeinflusst, so dass sich diese Art Kupplung nicht als Nottrennkupplung eignet.

Außerdem ist es häufig erforderlich, Leitungssegmente zwischen den an der Verladung beteiligten Komponenten, also dem Tank, aus dem das tiefkalte Medium entnommen wird, und dem Tank, in den das das tiefkalte Medium verladen wird, elektrisch voneinander zu isolieren. Hierdurch soll unter anderem verhindert werden, dass sich aufgrund von elektrischen Potentialunterschieden beim Anschluss der Leitung für die Verladung oder bei der Trennung nach erfolgter Verladung Funken bilden, die eventuell an der Kupplung austretendes brennbares Fluid oder andere brennbare Gase in Brand setzen. Insbesondere bei der Herstellung vakuumisolierter Leitungen kommen häufig Edelstahl oder andere elektrisch leitfähige Metalle zum Einsatz, so dass gerade in diesen Fällen entsprechende Maßnahmen zur elektrischen Isolierung von Leitungsabschnitten erforderlich sind.

Zur elektrischen Isolierung von vakuumisolierten Leitungsabschnitten können müssen jeweils zwischen den Innenrohren und den Außenrohren der Leitungsabschnitte Ringe aus elektrisch nicht leitfähigem Material angeordnet werden, die zur Erhaltung des Vakuums dauerhaft gasdicht mit den jeweiligen Rohrenden verbunden werden müssen. Diese Art der elektrischen Isolierung von Leitungsabschnitten ist bei realistischer Betrachtung nicht möglich.

Eine gattungsbildende Kupplung ist aus GB 2 296 749 A bekannt.

Hiervon ausgehend hat die vorliegende Erfindung die Aufgabe, eine Kupplungsanordnung für fluidführende Leitungen zu schaffen, die eines oder mehrere der eingangs genannten Probleme überwindet oder bekannte Kupplungsanordnungen zumindest verbessert.

### Zusammenfassung der Erfindung

Zur Lösung dieser Aufgabe schlägt die Erfindung nach einem ersten Aspekt eine Kupplungsanordnung zum Verbinden thermisch isolierter fluidführender Leitungen vor, welche eine Kupplung mit einem ersten Kupplungsteil und einem zweiten Kupplungsteil sowie Verbindungsmittel aufweist, um die beiden Kupplungsteile aneinander zu koppeln. Die Verbindungsmittel können dabei zur dauerhaften oder lösbaren Verbindung der Kupplungsteile ausgestaltet sein, bspw. mittels Schrauben bzw. Spann- oder Klemmringen bzw. -zangen. Verbindungsmittel zur wiederholt werkzeugfrei lösbaren Verbindung von Leitungen können insbesondere für zeitweise Verbindungen von Leitungen verwendet werden, bspw. zur Verbindung nur während einer Verladung von Fluiden. Werkzeugfrei heißt in diesem Kontext, dass die Verbindungsmittel ein Lösen der Kupplungsteile voneinander ohne besonderes Werkzeug ermöglichen, bspw. durch Verriegelungshebel oder Verriegelungsklammern, die dauerhaft mit einem Kupplungsteil verbunden sind. Die Verbindungsmittel können zusätzlich oder alternativ zur Trennung nach Betätigung einer dazu vorgesehenen Verriegelungsvorrichtung dazu eingerichtet sein, bei Überschreiten einer vorbestimmten, axial auf die Kupplung bzw. die Kupplungsanordnung wirkenden Zugkraft oder eines auf die Kupplung bzw. die Kupplungsanordnung wirkenden Biegemoments eine Trennung der Kupplungsteile voneinander zu ermöglichen.

Die Kupplungsanordnung umfasst außerdem eine die verbundenen Kupplungsteile, insbesondere die nicht isolierten Kupplungsteile, umschließende Umhüllung, welche beiderseits der Kupplung jeweils an der thermischen Isolierung der fluidführenden Leitungen anliegt. Die thermische Isolierung der fluidführenden Leitungen kann bspw. eine Vakuumisolierung mit einem Innenrohr und einem Außenrohr umfassen, deren Zwischenraum evakuiert ist oder zumindest einen wesentlich geringeren Innendruck aufweist als ein Umgebungsdruck. Die Rohre können aus Stahl, bspw. Edelstahl, oder anderen geeigneten Metallen oder Legierungen oder aus Kunststoffen mit ausreichender mechanischer und thermischer Festigkeit bestehen. Andere Isolierungen umfassen Umhüllungen der eigentlichen fluidführenden Leitung mit geeigneten thermischen Isolatoren. Die die Kupplungsteile umschließende Umhüllung kann selbst eine thermische Isolierung bereitstellen. Hierzu kann die Umhüllung aus thermisch isolierendem Material bestehen, oder ein zwischen einer inneren und einer äußeren Oberfläche der Umhüllung befindlicher Hohlraum kann mit einem thermisch isolierenden Material gefüllt sein. Eine geeignete Füllung kann bspw. beispielsweise Mikro-Glashohlkugeln umfassen, sogenannte Glass Bubbles, welche sich nur an kleinen Flächen berühren und so den Wärmetransport durch Wärmeleitung reduzieren. Außerdem behindern die Feststoffe den Wärmetransport durch Konvektion. Die zur thermischen Isolierung eingerichtete Umhüllung kann unter anderem dazu eingerichtet sein, sicherzustellen, dass die Temperatur auf der äußeren Oberfläche der Umhüllung oberhalb der Kondensationstemperatur von Sauerstoff liegt.

Die Kupplung kann ferner Dichtmittel zum Abdichten der beiden Kupplungsteile im aneinandergekoppelten Zustand aufweisen. Dichtmittel können zwischen den Kupplungsteilen angeordnete Dichtringe oder -scheiben umfassen, es ist aber auch möglich die Dichtmittel konstruktiv als integralen Bestandteil der Kupplungsteile vorzusehen, bspw. durch eine besondere Oberflächengestaltung und/oder -bearbeitung.

Grundsätzlich ist es bei jeder Art Kupplung von fluidführenden Leitungen erwünscht, bei einer Verbindung oder Trennung den Austritt des Fluids zu verhindern oder zumindest so weit wie möglich zu begrenzen. Hierfür kommen in der Regel selbstabdichtende Kupplungen, beziehungsweise Trockenkupplungen zum Einsatz, also Kupplungen, deren Kupplungsteile die Leitungen bei der Auftrennung der Kupplung abdichten. Die Kupplungsteile sind lösbar und flüssigkeitsdicht miteinander verbindbar, z.B. verrastbar. Im Durchströmkanal ist in jedem Kupplungsteil eine Dichtanordnung angeordnet, z.B. ein federbelastetes Ventil mit Schließelementen. Die Schließelemente halten die Ventile bei zusammengekoppelter Kupplung geöffnet. Beim Trennen der Kupplungsteile dichten die Ventile die mit dem jeweiligen Kupplungsteil verbundene Leitung ab.

Ein oder beide Kupplungsteile können dementsprechend außerdem jeweils eine Dichtanordnung aufweisen, welche bei getrennter Kupplung die mit dem jeweiligen Kupplungsteil verbundene Leitung fluiddicht verschließt, und die bei gekoppelten Kupplungsteilen die jeweiligen Fluidkanäle der Leitungen fluidführend miteinander verbindet. Die Dichtanordnung kann bspw. ein federbeaufschlagtes oder von sonstigen Schließelementen betätigtes Ventil umfassen, z.B. ein Kugel- oder Kegelventil, das bei getrennten Kupplungsteilen das Kupplungsteil verschließt. Andere Ausführungen der Dichtanordnung sind ebenfalls denkbar, z.B. Sperrschieber oder -klappen oder dergleichen.

Die Umhüllung ist mehrteilig ausgeführt. Hierbei sind im getrennten Zustand der Kupplung ein oder mehrere, eine erste Haube der Umhüllung bildende Teile mit der mit dem ersten Kupplungsteil verbundenen fluidführenden Leitung verbunden. Entsprechend sind ein oder mehrere, eine zweite Haube der Umhüllung bildende Teile mit der mit dem zweiten Kupplungsteil verbundenen fluidführenden Leitung verbunden, so dass bei getrennter Kupplung jeweils eine Haube mit einem Kupplungsteil verbunden ist.

Bei einer mehrteilig ausgeführten Umhüllung können die erste und die zweite Haube der Umhüllung gasdicht oder auf eine einen Gasaus- oder -eintritt zumindest verzögernde Weise an der thermischen Isolierung der Leitung anliegen oder damit verbunden sein. Eine gasdichte Verbindung ist beispielsweise über entsprechende Dichtmittel zwischen einer Haube und der Leitung herstellbar, oder über eine stoffschlüssige Verbindung von Haube und thermischer Isolierung der Leitung. Je nach Ausführung kann die Verbindung einen Gasaus- oder -eintritt zumindest verzögern. Die erste und die zweite Haube der Umhüllung sind lösbar sowie gasdicht oder auf eine einen Gasaus- oder -eintritt zumindest verzögernde Weise miteinander verbindbar, z.B. durch aneinander liegende oder ineinandergreifende Dichtflächen, zwischen denen eine Dichtung angeordnet ist. Die Hauben können selbst jeweils ebenfalls mehrteilig ausgeführt sein. Mindestens eine der Hauben der Umhüllung kann auf der fluidführenden Leitung axial verschiebbar angeordnet sein. Eine mehrteilige Ausführung der Umhüllung bzw. der Hauben und eine axiale Verschiebbarkeit einer Haube können bei der Montage Vorteile mit sich bringen.

Die Umhüllung kann eine Ein- oder Auslassöffnung zur Einrichtung des Hohlraums zur Vermeidung der Kondensation von in den Hohlraum eingedrungener Atmosphäre aufweisen. Bei einer mehrteiligen Umhüllung kann die Ein- oder Auslassöffnung an zumindest einer der Hauben angeordnet sein. Die Einrichtung des Hohlraums zur Vermeidung der Kondensation von in den Hohlraum eingedrungener Atmosphäre kann ein Einbringen von bei einer im Inneren der Umhüllung an einer Oberfläche im Betrieb auftretenden Temperatur nicht kondensierenden, vorzugsweise nicht brennbaren Medien über die Einlassöffnung umfassen. Solche Medien sind bspw. nicht brennbare Gase mit einer Kondensationstemperatur, die unterhalb der niedrigsten, an der Oberfläche der von der Umhüllung umschlossenen Komponenten und/oder der inneren Oberfläche der Umhüllung liegende Kondensationstemperatur und insbesondere Schmelztemperatur aufweisen. Helium mit einer sehr niedrigen Kondensationstemperatur ist bspw. ein geeignetes Gas. Das oder die eingebrachten Medien verdrängen zumindest einen Teil der Atmosphäre innerhalb der Umhüllung und verkleinern damit die Menge des in der eingeschlossenen Atmosphäre enthaltenen Sauerstoffs und anderer Gase, die im Inneren der Umhüllung kondensieren könnten. Hierbei kann ein geringer Überdruck des oder der Medien innerhalb der Umhüllung eingestellt sein, welcher mittels eines mit dem Inneren der Umhüllung in Verbindung stehenden Drucksensors überwachbar ist. Sofern die Umhüllung nicht gasdicht um die Kupplung angeordnet ist, kann bei unterschreiten eines Schwellwertes neues Medium oder Gas in den Innenraum eingebracht werden, um den ursprünglichen Überdruck wiederherzustellen und das Eindringen von sauerstoffhaltiger Umgebungsluft zu verhindern. Zusätzlich kann ein, vorzugsweise selbsttätig öffnendes, Überdruckventil als Sicherheitsventil vorgesehen sein, das ein Ansteigen des Innendrucks über einen bestimmten Wert verhindert.

Alternativ zum Einbringen des oder der Medien kann über die Auslassöffnung in der Umhüllung ein gegenüber dem Umgebungsdruck geringerer Druck hergestellt werden, beispielsweise durch eine Unterdruckpumpe. Hierzu kann der Innenraum der Umhüllung zumindest zeitweise mit einer Vakuumpumpe fluidisch verbindbar sein, bspw. über ein Entlüftungsventil. Die Vakuumpumpe kann durch einen mit dem Inneren der Umhüllung fluidisch in Verbindung stehenden Drucksensor bedarfsweise druckabhängig aktiviert werden, etwa wenn die Umhüllung nicht völlig gasdicht um die Kupplung angeordnet ist, um den ursprünglichen Unterdruck im Inneren der Umhüllung wiederherzustellen. Zusätzlich kann ein, vorzugsweise selbsttätig öffnendes, Unterdruckventil als Sicherheitsventil vorgesehen sein, das einen zu geringen Innendruck verhindert, der zu einer Verformung der Umhüllung führen könnte. Bei dieser Alternative ist die Umhüllung zweckmäßigerweise mit strukturellen Verstärkungen ausgestattet, um der Umhüllung eine ausreichende Formstabilität und Festigkeit zu geben, bspw. Stege und/oder Rippenstrukturen. Falls die Umhüllung um eine Nottrennkupplung angeordnet ist, die bei Überschreiten zulässiger axialer Zugkräfte oder Biegemomente die Leitungen voneinander trennt, kann ein Belüftungsventil vorgesehen sein, das den Unterdruck innerhalb der Umhüllung ausgleicht, um die Nottrennung nicht zu ver- oder behindern. Das Belüftungsventil kann über einen mit den Leitungen verbundenen Kraft- oder Wegaufnehmer angesteuert sein und belüftet den evakuierten Hohlraum vorzugsweise bei einer mechanischen Belastung die kleiner ist als diejenige, bei der die Nottrennkupplung die Leitungen voneinander trennt. Bei einer Kupplung, die regelmäßig verbunden und getrennt wird, kann das Belüftungsventil mit einer Betätigungsvorrichtung zur Trennung bzw. Verbindung der Kupplung verbunden sein.

Ausführungsformen der Kupplung können elektrische Isoliermittel zwischen den Kupplungsteilen und den Verbindungsmitteln oder zwischen einem Kupplungsteil und einer damit verbundenen fluidführenden Leitung aufweisen. Hierzu kann bei letzterer Variante zwischen mindestens einem Rohrende und dem daran angebrachten Kupplungsteil eine elektrische Isolierung angeordnet sein, beispielsweise ein Ring bzw. eine Scheibe aus elektrisch isolierendem Material. Sofern das Rohrende das Kupplungsteil, sowie die dazwischen angeordnete elektrische Isolierung mittels Schrauben oder anderer Verbindungselemente verbunden sind, ist es notwendig, auch diese Schrauben oder Verbindungselemente aus elektrisch nicht leitendem Material auszuführen oder die elektrische Verbindung von Rohrende und Kupplungsteil mittels entsprechender Isolierhülsen, isolierenden Ummantelungen um die Verbindungselemente oder dergleichen zu unterbrechen. Die Umhüllung kann bei dieser Variante die elektrischen Isoliermittel einschließen. Bei einer elektrischen Isolierung zwischen den beiden Kupplungsteilen, beispielsweise mittels eines elektrisch nicht leitenden Dichtrings zwischen den Kupplungsflächen, müssen die die Kupplungsteile zusammenhaltenden Verbindungsmittel ebenfalls elektrisch nicht leitend ausgeführt sein.

Die Umhüllung kann bei einer oder mehreren der vorstehend beschriebenen Ausführungsformen und Varianten aus einem elektrisch nichtleitenden Material bestehen, bspw. einem elektrisch nichtleitenden Kunststoff wie Polyethylen (PE) oder glasfaserverstärktem Kunststoff (GFK). Falls die Umhüllung selbst aus einem elektrisch leitenden Material besteht, kann zwischen der Umhüllung und ihrer Verbindung mit der thermischen Isolierung der fluidführenden Leitung ein elektrischer Isolator angeordnet sein. Alternativ oder zusätzlich kann, bspw. bei einer mehrteiligen Umhüllung mit zwei Hauben, eine elektrische Isolierung zwischen den Hauben angeordnet sein.

Neben der Kupplung, gleich welcher Ausführung, können also andere Teile des Leitungssystems, die nicht auf einfache Weise isoliert werden können, bspw. die Anordnung zur elektrischen Isolierung von Leitungssegmenten, ebenfalls von der Umhüllung der Kupplung umschlossen sein. Es ist aber auch möglich, diese Teile jeweils mit einer separaten Umhüllung wie oben beschrieben zu umhüllen.

Die elektrische Isolierung zwischen den Kupplungsteilen bzw. dem mindestens einen Rohrende und dem daran angebrachten Kupplungsteil sowie die elektrisch isolierenden Eigenschaften der Hauben bzw. derer Befestigung an der Leitung gewährleisten die geforderte elektrische Trennung der beiden Leitungsteile.

### Kurze Beschreibung der Zeichnung

Nachfolgend wird die Erfindung anhand einer Ausführungsform unter Bezugnahme auf die begleitenden Figuren exemplarisch näher erläutert. Alle Figuren sind rein schematisch und nicht maßstäblich. Es zeigen:
- Fig. 1: eine schematische Schnittdarstellung einer exemplarischen erfindungsgemäßen Kupplungsanordnung im getrennten Zustand, und
- Fig. 2: eine schematische Schnittdarstellung der exemplarischen erfindungsgemäßen Kupplungsanordnung im gekoppelten Zustand.

Gleiche oder ähnliche Elemente sind in den Figuren mit gleichen oder ähnlichen Bezugszeichen versehen.

### Ausführungsbeispiel

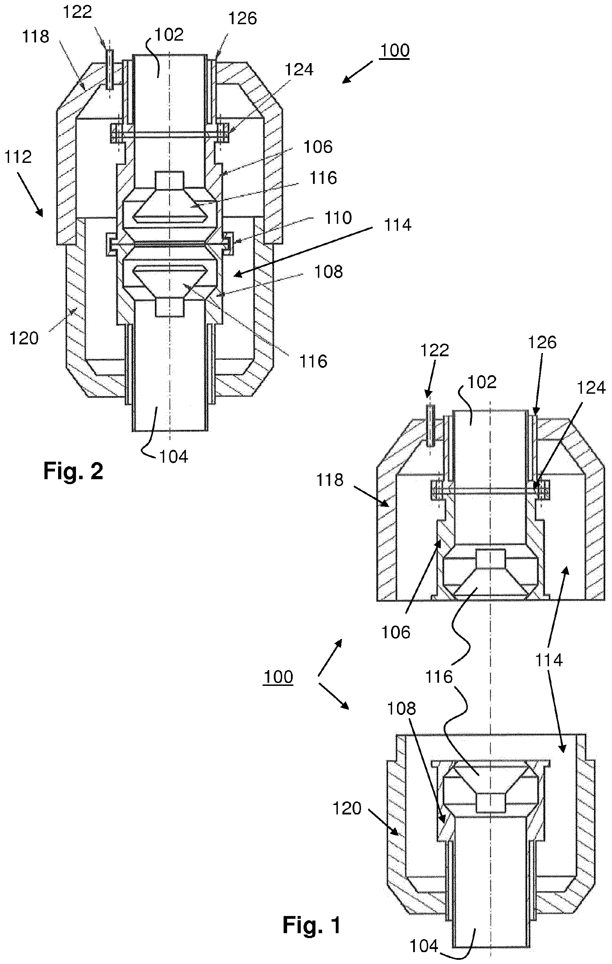

Figur 1 zeigt eine schematische Schnittdarstellung einer exemplarischen erfindungsgemäßen Kupplungsanordnung 100 im getrennten Zustand. Die Umhüllung 112 der exemplarisch dargestellten Kupplungsanordnung umfasst eine erste Haube 118 und eine zweite Haube 120. Die Hauben bestehen bspw. aus einem elektrisch nicht leitenden Material wie etwa PE oder GFK. Die Hauben liegen nicht unmittelbar an der Oberfläche der Kupplungsteile 108, 110 an, sondern bilden einen Hohlraum 114, der zur Vermeidung der Kondensation von in den Hohlraum eingedrungener Atmosphäre evakuiert oder mit bei einer im Inneren der Umhüllung an einer Oberfläche im Betrieb herrschenden Temperatur nicht kondensierenden, vorzugsweise nicht brennbaren Medien gefüllt werden kann. Die erste und die zweite Haube 118, 120 liegen an der thermischen Isolierung 126 der fluidführenden Leitungen 102 bzw. 104 an, vorzugsweise gasdicht. Die thermische Isolierung 126 ist bei diesem Beispiel ein äußeres Rohr einer vakuumisolierten Fluidleitung. An der ersten Haube 118 ist eine Ein- bzw. Auslassöffnung 122 vorgesehen, über die der Innenraum 114 bei gekoppelten Kupplungsteilen 106, 108 und miteinander verbundenen Hauben 118, 120 evakuiert oder mit den nicht kondensierenden , vorzugsweise nicht brennbarem Medien (nicht in der Figur gezeigt) befüllt werden kann. Die fluidführende Leitung 104 ist direkt mit dem zweiten Kupplungsteil 108 verbunden. Zwischen der fluidführenden Leitung 102 und dem ersten Kupplungsteil ist eine elektrische Isolierung 124 vorgesehen, die ebenfalls innerhalb der ersten Haube 118 angeordnet ist. Die elektrische Isolierung kann eine Isolierscheibe bzw. einen Isolierring umfassen, die bzw. der zwischen Flanschen von Leitung 102 und Kupplungsteil 106 angeordnet ist. Die Flansche sind mit elektrisch isolierenden Mitteln fluiddicht verbunden. Die Kupplungsteile 106, 108 bilden in dem in der Figur dargestellten Beispiel eine Nottrennkupplung, die bei Überschreiten einer Zugkraft oder eines Biegemoments auf die Leitungen 102, 104 die Kupplung trennt. Jedes der Kupplungsteile weist eine Dichtanordnung 116 auf, welche die voneinander getrennten Leitungsenden verschließt. In der Figur umfasst die Dichtanordnung 116 ein Kegelventil, welches von einem nicht in der Figur dargestellten Mechanismus gegen einen Ventilsitz gedrückt wird. Um auch eine hohe Feuerfestigkeit, beziehungsweise Feuersicherheit der Ventile zu erreichen, können die Ventile konusförmige erste Dichtflächen und die Ventilsitze konusförmige zweite Dichtflächen aufweisen, wobei der Öffnungswinkel der ersten Dichtflächen kleiner als der Öffnungswinkel der zweiten Dichtflächen ist. Mit der sich durch die unterschiedlichen Koni ergebenden hohen Anpressdruck auf die ringförmige Dichtungsfläche wird eine Abdichtung der Ventilanordnungen erzielt, die sowohl unter einer hohen Temperaturbelastung, wie sie bei einem Brand auftritt, als auch bei tiefkalten Medien mit entsprechend niedrigen Temperaturen der Ventilanordnungen sicher funktioniert. Die Dichtigkeit insbesondere für tiefkalte Medien kann weiter durch tieftemperaturelastische Dichtelemente verbessert werden. Ein in der Figur nicht dargestelltes tieftemperaturflexibles Dichtelement kann an zumindest einer der Dichtflächen eines Ventils oder eines korrespondierenden Ventilsitzes vorgesehen sein. Beispiele für tieftemperaturfeste Materialien sind Polytetrafluorethylen oder Fluorelastomere.

Figur 2 zeigt eine schematische Schnittdarstellung der exemplarischen erfindungsgemäßen Kupplungsanordnung im gekoppelten Zustand. Das erste und das zweite Kupplungsteil 106, 108 sind mit Verbindungsmitteln 110 dichtend verbunden. Die Dichtanordnungen 116 der beiden Kupplungsteile 106, 108 sind geöffnet und die Leitungen 102, 104 sind fluidisch miteinander verbunden. Die Verbindungsmittel 110 sind in der Figur durch eine Verschlussklammer dargestellt, welche bei einer einen bestimmten Wert überschreitenden Zugbelastung oder einem einen bestimmten Wert überschreitenden Biegemoment die Verbindung der Kupplungsteile 106, 108 freigibt und die Leitungen voneinander trennt. Die erste und die zweite Haube 118, 120 sind miteinander verbunden und bilden die Umhüllung 112 mit dem Hohlraum 114. Über die Ein-/Auslassöffnung 122 kann der nunmehr vorzugsweise gasdicht oder einen Gasaus- oder -eintritt zumindest verzögernd geschlossene Hohlraum 114 mit nicht kondensierende, vorzugsweise nicht brennbaren Medien gefüllt oder evakuiert werden (nicht in der Figur dargestellt). An der Kontaktstelle zwischen erster und zweiter Haube können in der Figur nicht gezeigte Dichtmittel vorgesehen sein. Die elektrische Isolierung der Leitungen 102, 104 wird durch die elektrische Isolierung 124 sichergestellt.

### Bezugszeichenliste

- 100: Kupplungsanordnung
- 102: Leitung
- 104: Leitung
- 106: erstes Kupplungsteil
- 108: zweites Kupplungsteil
- 110: Verbindungsmittel
- 112: Umhüllung
- 114: Hohlraum
- 116: Dichtanordnung
- 118: erste Haube
- 120: zweite Haube
- 122: Ein-/Auslassöffnung
- 124: elektrische Isolierung
- 126: thermische Isolierung

## Patentansprüche

1. Kupplungsanordnung (100) zum Verbinden einer ersten (102) und einer zweiten (104) thermisch isolierten fluidführenden Leitung, mit der ersten (102) und der zweiten (104) fluidführenden Leitung, mit einer Kupplung, die ein erstes an der ersten Leitung (102) angeordnetes Kupplungsteil (106), ein zweites an der zweiten Leitung (104) angeordnetes Kupplungsteil (108) und Verbindungsmittel (110) zur lösbaren Verbindung der beiden Kupplungsteile (106, 108) umfasst, wobei eine die Kupplung umschließende Umhüllung (112) vorgesehen ist, wobei ein von der Umhüllung (112) gebildeter Hohlraum (114) zur Vermeidung der Kondensation von in den Hohlraum (114) eingedrungener Atmosphäre eingerichtet ist,
wobei die Umhüllung eine erste und eine zweite Haube (118, 120) aufweist, wobei ein erstes Ende der ersten Haube (118) an der thermischen Isolierung (126) der ersten fluidführenden Leitung (102) anliegt, wobei ein erstes Ende der zweiten Haube (120) an der thermischen Isolierung der zweiten fluidführenden Leitung (104) anliegt, **dadurch gekennzeichnet, dass**
die erste und die zweite Haube (118, 120) mit ihren jeweiligen zweiten Enden über der Kupplung direkt miteinander lösbar verbindbar sind, wobei die zweiten Enden der ersten bzw. zweiten Haube (118, 120) sich in axialer Richtung jeweils mindestens bis zu einer Trennebene der Kupplung erstrecken, in der das erste und das zweite Kupplungsteil (106, 108) voneinander lösbar sind.

2. Kupplungsanordnung (100) nach Anspruch 1, **dadurch gekennzeichnet, dass** das erste und/oder das zweite Kupplungsteil (106, 108) eine Dichtanordnung (116) aufweist, welche bei getrennter Kupplung die mit dem jeweiligen Kupplungsteil (106, 108) verbundene Leitung (102, 104) verschließt.

3. Kupplungsanordnung (100) nach einem der vorhergehenden Ansprüche, **dadurch gekennzeichnet, dass** im getrennten Zustand der Kupplung ein oder mehrere, eine erste Haube (118) der Umhüllung (112) bildende Teile mit der mit dem ersten Kupplungsteil (106) verbundenen fluidführenden Leitung (102) verbunden sind, und ein oder mehrere, eine zweite Haube (120) der Umhüllung (112) bildende Teile mit der mit dem zweiten Kupplungsteil (108) verbundenen fluidführenden Leitung (104) verbunden sind.

4. Kupplungsanordnung nach Anspruch 3, **dadurch gekennzeichnet, dass** die erste und die zweite Haube (118, 120) der Umhüllung (112) gasdicht oder auf eine einen Gasaus- oder -eintritt zumindest verzögernde Weise an der thermischen Isolierung der mit der Kupplungsanordnung verbundenen Leitung (102, 104) anliegen oder damit verbunden sind, und dass die erste und die zweite Haube (118, 120) der Umhüllung (112) gasdicht oder auf eine einen Gasaus- oder -eintritt zumindest verzögernde Weise mit einander verbindbar sind.

5. Kupplungsanordnung (100) nach einem der vorhergehenden Ansprüche, **dadurch gekennzeichnet, dass** die Umhüllung (112) eine Ein- oder Auslassöffnung (122) zur Einrichtung des Hohlraums (114) zur Vermeidung der Kondensation von in den Hohlraum (114) eingedrungener Atmosphäre aufweist.

6. Kupplungsanordnung (100) nach Anspruch 5, **dadurch gekennzeichnet, dass** zur Einrichtung des Hohlraums (114) zur Vermeidung der Kondensation von in den Hohlraum (114) eingedrungener Atmosphäre bei einer im Inneren der Umhüllung an einer Oberfläche im Betrieb auftretenden Temperatur nicht kondensierende Medien über die Einlassöffnung (122) in den Hohlraum (114) einbringbar sind.

7. Kupplungsanordnung (100) nach Anspruch 5, **dadurch gekennzeichnet, dass** zur Einrichtung des Hohlraums (114) zur Vermeidung der Kondensation von in den Hohlraum (114) eingedrungener Atmosphäre der Hohlraum (114) über die Auslassöffnung (122) mittels einer zumindest zeitweise fluidisch mit dem Hohlraum (114) verbundenen Vakuumpumpe evakuierbar ist.

8. Kupplungsanordnung (100) nach Anspruch 6 oder 7, **dadurch gekennzeichnet, dass** an mindestens einer der Hauben (118, 120) ein Sicherheitsventil vorgesehen ist, welches einen Druckunterschied zwischen dem Hohlraum (114) und der Umgebung der Umhüllung (112) auf einen Schwellwert begrenzt.

9. Kupplungsanordnung (100) nach einem oder mehreren der vorhergehenden Ansprüche, **dadurch gekennzeichnet, dass** die Verbindungsmittel (110) zur Trennung der Kupplungsteile (106, 108) nach manueller Auslösung oder bei Überschreiten einer vorbestimmten axial auf die Kupplung (100) wirkenden Kraft bzw. einem einen Schwellenwert überschreitenden auf die Kupplung wirkenden Biegemoment eingerichtet sind.

10. Kupplungsanordnung (100) nach einem oder mehreren der vorhergehenden Ansprüche, **dadurch gekennzeichnet, dass** elektrische Isoliermittel (124) zwischen den Kupplungsteilen (106, 108) sowie den Verbindungsmitteln (110) oder zwischen einem Kupplungsteil (106) und einer damit verbundenen fluidführenden Leitung (102) vorgesehen sind.

11. Kupplungsanordnung (100) nach einem oder mehreren der vorhergehenden Ansprüche 3 - 10, **dadurch gekennzeichnet, dass** die Umhüllung (112) aus elektrisch nichtleitendem Material besteht, über einen elektrischen Isolator mit der thermischen Isolierung der fluidführenden Leitung verbunden ist, und/oder ein elektrischer Isolator zwischen den Hauben (118, 120) angeordnet ist.

12. Kupplungsanordnung (100) nach einem oder mehreren der vorhergehenden Ansprüche, **dadurch gekennzeichnet, dass** die Umhüllung eine thermische Isolierung zwischen dem Hohlraum und dem Äußeren der Umhüllung bereitstellt.

13. Thermisch isolierte fluidführende Leitung (102, 104) mit einer Kupplungsanordnung (100) nach einem oder mehreren der vorhergehenden Ansprüche.

14. Verladeeinrichtung für tiefkalte Fluide mit einer thermisch isolierten Leitung (102, 104) nach Anspruch 13 oder einer Kupplungsanordnung (100) nach einem oder mehreren der Ansprüche 1 - 12.

## Claims

1. Coupling arrangement (100) for connecting a first (102) and a second (104) thermally insulated fluid-conducting line, with the first (102) and the second (104) fluid-conducting line, with a coupling which comprises a first coupling part (106) arranged on the first line (102), a second coupling part (108) arranged on the second line (104), and connecting means (110) for detachably connecting the two coupling parts (106, 108), wherein an enclosure (112) enclosing the coupling is provided, wherein a cavity (114) formed by the enclosure (112) is arranged to prevent condensation of atmosphere which has entered the cavity (114),
wherein the enclosure comprises first and second hoods (118, 120), a first end of the first hood (118) abutting the thermal insulation (126) of the first fluid carrying conduit (102), a first end of the second hood (120) abutting the thermal insulation of the second fluid carrying conduit (104), **characterized in that**
the first and the second hood (118, 120) are directly detachably connectable to each other with their respective second ends above the coupling, wherein the second ends of the first and the second hood (118, 120) respectively extend in axial direction at least up to a parting plane of the coupling in which the first and the second coupling parts (106, 108) are detachable from each other.

2. Coupling arrangement (100) according to Claim 1, **characterized in that** the first and/or the second coupling part (106, 108) have/has a sealing arrangement (116) which, when the coupling is separated, closes the line (102, 104) connected to the respective coupling part (106, 108).

3. Coupling arrangement (100) according to one of the preceding claims, **characterized in that** the covering (112) in the separated state of the coupling, one or more parts forming a first hood (118) of the covering (112) are connected to the fluid-conducting line (102) connected to the first coupling part (106), and one or more parts forming a second hood (120) of the covering (112) are connected to the fluid-conducting line (104) connected to the second coupling part (108).

4. Coupling arrangement according to Claim 3, **characterized in that** the first and the second hood (118, 120) of the covering (112) lie against the thermal insulation of the line (102, 104) connected with the coupling, or are connected thereto, in a gas-tight manner or in a way at least delaying an escape or admission of gas, and **in that** the first and the second hood (118, 120) of the covering (112) are connectable to each other in a gas-tight manner or in a way at least delaying an escape or admission of gas.

5. Coupling arrangement (100) according to one of the preceding claims, **characterized in that** the covering (112) has an inlet or outlet opening (122) for configuring the cavity (114) to avoid the condensation of atmosphere which has penetrated into the cavity (114).

6. Coupling arrangement (100) according to Claim 5, **characterized in that**, in order to configure the cavity (114) to avoid the condensation of atmosphere which has penetrated into the cavity (114), media which do not condense at a temperature occurring on a surface in the interior of the covering during operation can be introduced into the cavity (114) via the inlet opening (122).

7. Coupling arrangement (100) according to Claim 5, **characterized in that**, in order to configure the cavity (114) to avoid the condensation of atmosphere which has penetrated into the cavity (114), the cavity (114) can be evacuated via the outlet opening (122) by means of a vacuum pump connected at least temporarily fluidically to the cavity (114).

8. Coupling arrangement (100) according to Claim 6 or 7, **characterized in that** at least one of the hoods (118, 120) is provided with a safety valve which limits a pressure difference between the cavity (114) and the surroundings of the covering (112) to a threshold value.

9. Coupling arrangement (100) according to one or more of the preceding claims, **characterized in that** the connecting means (110) are configured for separating the coupling parts (106, 108) after manual triggering or when a predetermined force acting axially on the coupling (101) or a bending torque which exceeds a threshold value and acts on the coupling (101) is exceeded.

10. Coupling arrangement (100) according to one or more of the preceding claims, **characterized in that** electrical insulating means (124) are provided between the coupling parts (106, 108) and the connecting means (110) or between a coupling part (106) and a fluid-conducting line (102) connected thereto.

11. Coupling arrangement (100) according to one or more of the preceding Claims 3 - 10, **characterized in that** the covering (112) is composed of an electrically non-conductive material, is connected to the thermal insulation of the fluid-conducting line via an electrical insulator, and/or an electrical insulator is arranged between the hoods (118, 120).

12. Coupling arrangement (100) according to one or more of the preceding claims, **characterized in that** the covering provides for thermal insulation between the cavity and the exterior of the covering.

13. Thermally insulated, fluid-conducting line (102, 104) having a coupling arrangement (100) according to one or more of the preceding claims.

14. Loading device for cryogenic fluids, having a thermally insulated line (102, 104) according to Claim 13 or a coupling arrangement (100) according to one or more of Claims 1 - 12.

## Revendications

1. Dispositif de couplage (100) pour le raccordement d'une première (102) et d'une deuxième (104) conduites de transport de fluide isolées thermiquement, avec les première (102) et deuxième (104) conduites de transport de fluide, avec un couplage qui comprend une première partie de couplage (106) disposée sur la première conduite (102), une deuxième partie de couplage (108) disposée sur la deuxième conduite (104) et des moyens de raccordement (110) pour le raccordement amovible des deux parties de couplage (106, 108), dans lequel une enveloppe (112) entourant le couplage est prévu, dans lequel une cavité (114) formée dans l'enveloppe (112) est conçue pour éviter la condensation de l'atmosphère ayant pénétré dans la cavité (114),
dans lequel l'enveloppe comprend un premier et un deuxième capots (118, 120), dans lequel une première extrémité du premier capot (118) s'appuie contre l'isolation thermique (126) de la première conduite de transport de fluide (102), dans lequel une première extrémité du deuxième capot (120) s'appuie contre l'isolation thermique de la deuxième conduite de transport de fluide (104),
**caractérisé en ce que**
les premier et deuxième capots (118, 120) peuvent être raccordés de manière amovible entre eux directement par l'intermédiaire du couplage, dans lequel les deuxièmes extrémités des premier et deuxième capots (118, 120) s'étendent respectivement dans la direction axiale respectivement au moins jusqu'à un plan de séparation du couplage, dans lequel les première et deuxième parties de couplage (106, 108) peuvent être détachées l'une de l'autre.

2. Dispositif de couplage (100) selon la revendication 1, **caractérisé en ce que** la première et/ou la deuxième partie de couplage (106, 108) comprend un dispositif d'étanchéité (116) qui, lorsque le couplage est séparé, ferme la conduite (102, 104) raccordée à la partie de couplage (106, 108) correspondante.

3. Dispositif de couplage (100) selon l'une des revendications précédentes, **caractérisé en ce que**, lorsque le couplage est séparé, une ou plusieurs parties formant un premier capot (118) de l'enveloppe (112) sont raccordées à la conduite de transport de fluide (102) raccordée à la première partie de couplage (106), et une ou plusieurs parties formant un deuxième capot (120) de l'enveloppe (112) sont raccordées à la conduite de transport de fluide (104) raccordé à la deuxième partie de couplage (108).

4. Dispositif de couplage (100) selon la revendication 3, **caractérisé en ce que** les premier et deuxième capots (118, 120) de l'enveloppe (112) s'appuient, de manière étanche aux gaz ou de façon à retarder une sortie ou une entrée de gaz, contre ou contre l'isolation thermique de la conduite (102, 104) raccordée au dispositif de couplage ou sont reliés avec celle-ci, et **en ce que** les premier et deuxième capots (118, 120) de l'enveloppe (112) peuvent être raccordés, de manière étanche aux gaz ou de façon à retarder une sortie ou une entrée de gaz, l'un avec l'autre.

5. Dispositif de couplage (100) selon l'une des revendications précédentes, **caractérisé en ce que** l'enveloppe (112) comprend une ouverture d'entrée ou de sortie (122) pour la réalisation de la cavité (114) permettant d'éviter la condensation de l'atmosphère ayant pénétré dans la cavité (114).

6. Dispositif de couplage (100) selon la revendication 5, **caractérisé en ce que**, pour la réalisation de la cavité (114) permettant d'éviter la condensation de l'atmosphère ayant pénétré dans la cavité (114), des milieux ne se condensant pas à une température régnant à l'intérieur de l'enveloppe sur une surface lors du fonctionnement peuvent être introduits par l'intermédiaire de l'ouverture d'entrée (122) dans la cavité (114).

7. Dispositif de couplage (100) selon la revendication 5, **caractérisé en ce que**, pour la réalisation de la cavité (114) permettant d'éviter la condensation de l'atmosphère ayant pénétré dans la cavité (114), la cavité (114) peut être vidée par l'intermédiaire de l'ouverture de sortie (112), au moyen d'une pompe à vide raccordée au moins temporairement de manière fluidique avec la cavité (114).

8. Dispositif de couplage (100) selon la revendication 6 ou 7, **caractérisé en ce que**, sur au moins un des capots (118, 120), est prévue une soupape de sécurité qui limite une différence de pression entre la cavité (114) et l'environnement de l'enveloppe (112) à une valeur seuil.

9. Dispositif de couplage (100) selon l'une ou plusieurs des revendications précédentes, **caractérisé en ce que** les moyens de raccordement (110) sont conçus pour la séparation des parties de couplage (106, 108) après un déclenchement manuel ou lors d'un dépassement d'une force prédéterminée appliquée axialement sur le couplage (100) ou d'un couple de flexion appliqué sur le couplage.

10. Dispositif de couplage (100) selon l'une ou plusieurs des revendications précédentes, **caractérisé en ce que** des moyens d'isolation électriques (124) sont prévus entre les parties de couplage (106, 108) ainsi qu'entre les moyens de raccordement (110) ou entre une partie de couplage (106) et une conduite de transport de fluide (102) raccordée avec celle-ci.

11. Dispositif de couplage (100) selon l'une ou plusieurs des revendications 3 - 10, **caractérisé en ce que** l'enveloppe (112) est constituée d'un matériau non électroconducteur, est raccordée par l'intermédiaire d'un isolateur électrique avec l'isolation thermique de la conduite de transport de fluide et/ou un isolateur électrique est disposé entre les capots (118, 120).

12. Dispositif de couplage (100) selon l'une ou plusieurs des revendications précédentes, **caractérisé en ce que** l'enveloppe met à disposition une isolation thermique entre la cavité et l'extérieur de l'enveloppe.

13. Conduite de transport de fluide thermiquement isolée (102, 104) avec un dispositif de couplage (100) selon l'une ou plusieurs des revendications précédentes.

14. Dispositif de chargement pour fluides réfrigérés, avec une conduite thermiquement isolée (102, 104) selon la revendication 13 ou un dispositif de couplage (100) selon l'une ou plusieurs des revendications 1 - 12.
